# EUROPEAN PATENT SPECIFICATION

(11) **EP 1 228 630 B1**
(45) Date of publication and mention of the grant of the patent: **17.10.2012**
(21) Application number: 00943475.4
(22) Date of filing: 17.07.2000
(51) Int. Cl.: H04L 29/06, H04Q 3/00, H04Q 11/00

(54) **TRANSPORT OF VERTICAL CONTROL PROTOCOL MESSAGES ON A SWITCHED COMMUNICATIONS NETWORK**
ÜBERMITTLUNG VON NACHRICHTEN DES VERTIKALEN STEUERUNGSPROTOKOLLS IN EINEM VERMITTELTEN KOMMUNIKATIONSNETZ
ACHEMINEMENT DE MESSAGES A PROTOCOLE DE CONTROLE VERTICAL SUR UN RESEAU DE COMMUNICATION COMMUTE

(30) Priority: 22.07.1999 AU PQ178199; 22.07.1999 AU PQ178299
(43) Date of publication of application: 07.08.2002
(73) Proprietor: Telefonaktiebolaget LM Ericsson (publ), 164 83 Stockholm (SE)
(72) Inventor: Groves, Christian, Keilor, Victoria 3036 (AU); Rytina, Ian, Carlton, VIC 3053 (AU); Graf, Leslie, Balwyn, VIC 3103 (AU); Terrill, Stephen, S-112 32 Stockholm (SE)
(74) Representative: Neuerburg, Gerhard
(86) International application number: PCT/AU2000/000854
(87) International publication number: WO 2001/008395

(56) References cited:
- WO-A-98/23056
- WO-A-99/28827
- US-A- 5 729 545
- US-A- 5 796 424
- HUITEMA C ET AL: "AN ARCHITECTURE FOR RESIDENTIAL INTERNET TELEPHONY SERVICE" IEEE NETWORK, IEEE SERVICE CENTER, NEW YORK, NY, US, vol. 13, no. 3, 1 May 1999 (1999-05-01), pages 50-56, XP000870631 ISSN: 0890-8044
- "Telecommunications and Internet Protocol Harmonization Over Networks (TIPHON); Network architecture and reference configurations; Phase II: Scenario 1 + Scenario 2; TS 101 313" ETSI STANDARDS, LIS, SOPHIA ANTIPOLIS CEDEX, FRANCE, vol. TIPHON-2, no. V0.4.2, 1 February 1999 (1999-02-01), XP014006037 ISSN: 0000-0001
- FERNANDO CUERVO NORTEL NETWORKS CHRISTIAN HUITEMA TELCORDIA TECHNOLOGIES KEITH KELLY NETSPEAK BRIAN ROSEN FORE SYSTEMS PAUL SIJBEN: "MEGACO Protocol; draft-ietf-megaco-protocol-01.txt" IETF STANDARD-WORKING-DRAFT, INTERNET ENGINEERING TASK FORCE, IETF, CH, vol. megaco, no. 1, 16 April 1999 (1999-04-16), XP015022845 ISSN: 0000-0004
- BAJAJ et al: "R2 Package for Megaco Protocol", 25 June 1999, <draft-ietf-megaco-R2package-co.txt> XP002905253
- HUITEMA ET AL.: 'An architecture for residential internet telephony service' IEEE INTERNET COMPUTING May 1999 - June 1999, pages 73 - 82, XP002144528
- ANQUETIL et al: "Media Gateway Control Protocol and Voice over IP Gateways", 2ns Quarter 1999, Especially page 153, note 1, XP000830045
- <draft-ietf-megaco-reqs-00.txt> GREENE et al., 27 January 1999

## Description

### FIELD OF INVENTION

The present invention relates generally to the sending and receiving of messages between two entities of a physically decomposed telecommunications node, where the media connections of one of the entities is controlled by the other, and in particular to the transport of Vertical Control Protocol messages between two such entities. The invention is suitable for use in the transport of Vertical Control Protocol messages between a media gateway controller and a media gateway of a physically decomposed H.323 gateway, and it will be convenient to hereinafter describe the invention in relation to that exemplary application. It is to be appreciated, however, that the invention is not limited to use in that application, only.

### BACKGROUND ART

For cost-efficiency reasons many telecommunications operators are increasingly deploying non-STM transport technologies, such as Asynchronous Transfer Mode (ATM), Internet Protocol (IP), inside their networks and therefore require a standardized solution to support existing services of today's public telecommunication networks over multi-vendor non-STM infrastructures. In the current public telecommunication networks the call control (CC) and bearer control (BC) are tightly coupled in the same public network protocol, such as ISDN User Part (ISUP). As a result of this trend to run over multi-vendor non-STM infrastructures a new network architecture has been developed that requires the splitting of call control (CC) and bearer control (BC) into separate protocols. As a result of the split of CC and BC functions a new interface is exposed between the CC function and BC function. A protocol is required to enable the coupling between the CC and BC functions when a telecommunications node is implemented in a separated environment.

The International Telecommunications Union - Telecommunications Sector (ITU-T) and the Internet Engineering Task Force (IETF) are currently defining one example of such a protocol, namely a Gateway Control Protocol. This protocol is designed to control multimedia connections from a remote controlling entity. This protocol is known as H.248 in the ITU, whilst in the IETF the protocol is referred to as "MEGACO". For the purposes of the present application, this protocol will be referred to as the Vertical Control Protocol.

The Vertical Control Protocol is intended for use in multimedia networks where there is a physical decomposition of a traditional H.323 gateway function into two separate entities, namely a Media Gateway Controller (MGC) and a Media Gateway (MG), operating in a "client-server" relationship. The MGC is seen as the server, and controls the call logic for the physical connections in the MG. The MG is seen as the client, administering the actual physical connections of the media in response to commands from the MGC.

Examples of information passed from the MGC to the MG in the Vertical Control Protocol are information for ordering a connection from one telephony circuit in the MG to another (i.e. when the MGC receives a request for a telephone call to be set up), information for ordering tones to be inserted in the MG's media stream, and information for ordering disconnection of the circuits in the MG. Examples of information passed from the MG to the MGC in the Vertical Control Protocol are accounting information on call duration, or statistical information on the current use of the multimedia connections.

In the ITU-T Proposed Recommendation H.248, the Vertical Control Protocol is proposed to be transported over an IP signalling link. However, such a technique is ill-suited for use with traditional switched communications networks, since separate IP signalling networks may be required to be introduced purely to enable the use of the Vertical Control Protocol.

It would therefore be desirable to provide a method of transporting Vertical Control Protocol messages between entities of a physically decomposed telecommunications node which ameliorates or overcomes one or more disadvantages of the prior art.

It would also be desirable to enable the transport of Vertical Control Protocol messages between entities of a physically decomposed telecommunications node, such as a media gateway controller and a media gateway of a physically decomposed H.323 gateway, without requiring the use of an IP signalling link.

Further prior art is being identified:
WO98/23056 discloses a system for interfacing an ISDN or non-ISDN system with a broadband system, comprising an SS7 protocol converter for interworking between ISDN signaling and SS7 signalling.
The article "An Architecture for Residential Internet Telephony Service" of Christian Huitema et al, IEEE network, IEEE Service center, New York, vol. 13, no. 3, May 1999, pages 50-56 discloses an architecture for a residential internet telephony service based on a gateway decomposition that separates the media transformation function from the gateway control function of the gateway being centralized in a call agent.
The standard document TS 101 313, version 0.4.2 of the European Telecommunications Standard Institute, ETSI, titled "Telecommunications and Internet Protocol Harmonization Over Networks (TIPHON); Network architecture and reference configurations; Phase II: Scenario 1 + Scenario 2" discloses a call reference configuration comprising a media gateway and a media gateway controller maintaining the Gateway call state.

### SUMMARY OF INVENTION

In one aspect, the present invention provides a communication system having a CC and BC separated network, the communication system being operatively based on a number of communication protocol layers including a Vertical Control Protocol layer, the Vertical Protocol Layer being adapted to use a Vertical Control Protocol for communication between nodes in the communication system, the improvement including:
a protocol adaptation function layer which is adapted to use a protocol adaptation function, the protocol adaptation function serving operatively to provide a transliteration between Vertical Control Protocol messages and network protocol messages.

Preferably, the transliteration is from Vertical Control Protocol messages to one of a plurality of signaling transport protocols and / or for network protocol messages of one of a plurality of signaling transport protocols to Vertical Control Protocol messages.

In another aspect the present invention provides a method of transporting messages in a communication system including a CC and BC separated network, the communication system being based on communication protocol layers including a Vertical Control Protocol layer including a Vertical Control Protocol for communication between nodes in the system, the method including:
Providing a protocol adaptation function layer adapted to use a protocol adaptation function, and
Providing transliteration of Vertical Control Protocol messages to network protocol messages of one of a plurality of signaling transport protocols and / or converting network protocol messages of one of a plurality of signaling transport protocols to Vertical Control Protocol messages.

In essence, the invention stems from a realisation of the extended use of the Vertical Control Protocol to more than one signaling transport technology, ie IP signaling only, can be provided by converting or transliterating between Vertical Control Protocol messages from the Vertical Control Protocol layer and messages able to be correctly interpreted by the network layer of a chosen signaling transport technology and vice-versa.

Preferably, the protocol adaptation function converts Vertical Control Protocol messages by logically mapping the contents of the Vertical Control Protocol messages according to one of a plurality of network protocol message formats.

Preferably, the protocol adaptation function converts network protocol messages to Vertical Control Protocol messages by logically mapping the contents of the network protocol messages according to a Vertical Control Protocol message format.

Preferably, the protocol adaptation function segments and reassembles Vertical Control Protocol messages.

Preferably, the protocol adaptation function converts primitives from a generic transport service between the Vertical Control Protocol layer and the protocol adaptation function layer into primitives for the network layer of one of the plurality of signaling transport protocols

The network protocol messages may be MTP protocol messages for SS7 signaling.

The network protocol messages may be MTP broadband protocol messages for ATM signaling.

The network protocol messages may be SSCOP protocol messages for ATM signaling.

In one embodiment, the present invention provides a method of transporting Vertical Control Protocol messages between a first entity and a second entity of a physically decomposed telecommunications node, wherein media connections in said second entity being controlled by said first entity, the method including the steps of:
- creating a Vertical Control Protocol message in one of said entities, and
- transporting said Vertical Control Protocol message over a switched communications network to the other of entities through a communication protocol stack including a layer conforming to a message transfer part protocol.

In one embodiment, the first and second entities are respectively a signaling gateway, such as a media gateway controller, and a media termination gateway, such as a media gateway. The telecommunications node may be a physically decomposed media gateway.

The Vertical Control Protocol message may be sent as an out-of-band signaling message on the switched communications network.

In one example, the Vertical Control Protocol message may be transported on an SS7 signaling link.

The layer may conform to the SS7 MTP3 protocol for communication via a MTP2 layer in the protocol stack.

In another example, the Vertical Control Protocol message may be transported on an ATM link.

The network layer may conform to the MTP3B layer protocol for communication through a Network-to-Network Interface Signaling ATM Adaptive Layer in the protocol stack.

In one embodiment, the Vertical Control Protocol message is adapted by a signaling transport conversion function prior to transport through the MTP layer.

The signaling transport conversion function may including a segmentation and re-assembly function in order to limit the length of the Vertical Control Protocol message.

Another embodiment of the present invention provides a physically decomposed telecommunications node including a first entity and a second entity, media connections in said second entity being controlled by said first entity, wherein said node includes
- means for creating a Vertical Control Protocol message in one of said entities, and
- means for transporting said Vertical Control Protocol message over a switched communications network to the other of entities through a communication protocol stack including a layer conforming to a message transfer part protocol.

In this way, existing switched telecommunications networks, such as ATM networks, can be used for the transportation of Vertical Control Protocol messages between entities of a physically decomposed telecommunications node without requiring the introduction of a separate IP signaling network.

A still further embodiment of the present invention provides a method of transporting Vertical Control Protocol messages between a first entity and a second entity of a physically decomposed telecommunications node, wherein media connections in said second entity being controlled by said first entity, the method including the steps of:
- creating a Vertical Control Protocol message in one of said entities, and
- transporting said Vertical Control Protocol message over a switched communications network to the other of entities through a communication protocol stack including a layer conforming to a service specific connection oriented protocol.

In one embodiment, the first and second entities are respectively a signalling gateway, such as a media gateway controller, and a media termination gateway, such as a media gateway. The telecommunications node may be a physically decomposed media gateway.

In one embodiment, the Vertical Control Protocol message may be transported in one or more ATM cells, preferably over a B-ISDN link.

The Vertical Control Protocol message may be adapted by a signalling transport conversion function prior to transport through the service specific connection oriented protocol layer.

Another embodiment of the invention provides a physically decomposed telecommunications node including a first entity and a second entity, media connections in said second entity being controlled by said first entity, wherein said node includes
- means for creating a Vertical Control Protocol message in one of said entities, and
- means for transporting said Vertical Control Protocol message over a switched communications network to the other of entities through a communication protocol stack including a layer conforming to a service specific connection oriented protocol.

Yet another embodiment of the present invention provides a first entity forming part of a physically decomposed telecommunications node including said first entity and a second entity, media connections in said second entity being controlled by said first entity, wherein said entity includes
- means for creating a Vertical Control Protocol message, and
- means for transporting said Vertical Control Protocol message over a switched communications network to said second entity through a communication protocol stack including a layer conforming to a service specific connection oriented protocol.

In this way, existing switched telecommunications networks, such as ATM networks, can be used for the transportation of Vertical Control Protocol messages between entities of a physically decomposed telecommunications node without requiring the introduction of a separate IP signaling network.

The following description refers in more detail to the various features of the present invention. To facilitate an understanding of the invention, reference is made in the description to the accompanying drawings where the method of transporting Vertical Control Protocol is illustrated in a preferred embodiment. It is to be understood that the invention is limited to this preferred embodiment.

### DESCRIPTION OF PREFERED EMBODIMENTS

In the drawings:
Figure 1 is a schematic representation of interfaces and functions of an H.323 gateway;
Figure 2 is a schematic representation of one embodiment of a physical decomposition of the H.323 gateway of Figure 1 into a media gateway controller and a media gateway;
Figure 3 is a graphical representation of various parts of a Vertical Control Protocol message exchanged between the media gateway controller and a media gateway of Figure 2;
Figure 4 is a schematic diagram of one embodiment of protocol stacks used by the physically decomposed H.323 gateway of Figure 2 to communicate Vertical Control Protocol messages between the media gateway controller and a media gateway; and
Figure 5 is schematic diagram of a second embodiment of protocol stacks used by the physically decomposed H.323 gateway of Figure 2 to communicate Vertical Control Protocol messages between the media gateway controller and a media gateway.
Figure 6 is a schematic diagram of a third embodiment of protocol stacks used by the physically decomposed H.323 gateway of Figure 2 to communicate Vertical Control Protocol messages between the media gateway controller and a media gateway.

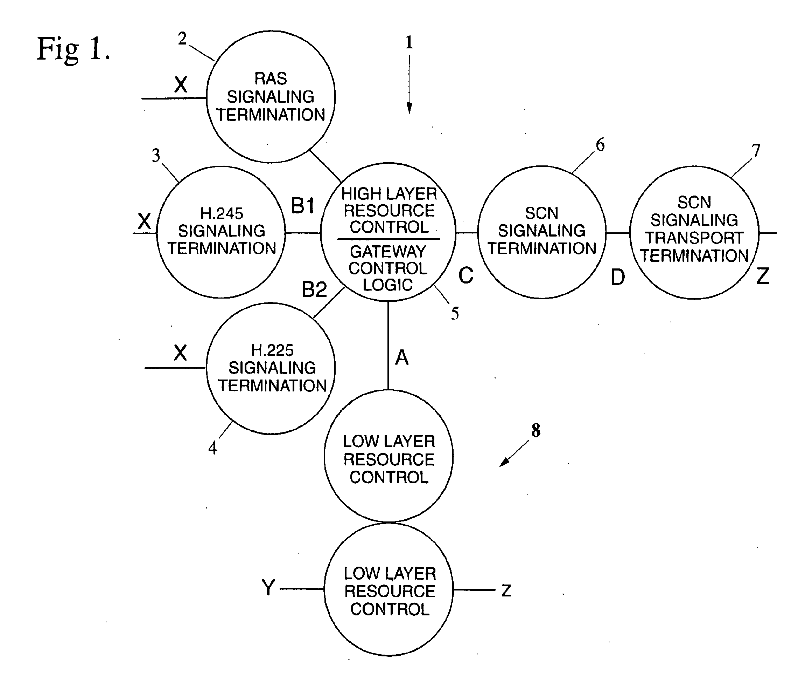

Referring now to Figure 1, there is shown generally a representation of a group of interfaces and functions of a multimedia gateway 1 operating in accordance with ITU-T Recommendation H.323. The multimedia gateway 1 is an endpoint on an H.323 multimedia network that provides for real-time, two-way communications between terminals on the packet-based H.323 network and other ITU-T terminals on a switched circuit communications network - such as ISDN or PSTN terminals - or to another H.323 gateway. Whilst the present invention will be described in relation to multimedia gateways, it is to be understood that it is also applicable to terminals, gatekeepers, multipoint controllers, multipoint processors and other telecommunications nodes forming part of a multimedia network.

The multimedia gateway 1 includes signalling termination points 2, 3 and 4 respectively acting to provide an interface between RAS (Registration, Admissions and Status) signalling messages, H.245 signalling messages and H.225 signalling messages in a H.323 network and a gateway control logic unit 5. A further signalling termination point 6 acts to provide an interface between Facility Associated Signalling SCN (Switched Circuit Network) messages and the gateway control unit 5. A SCN signalling transport termination point 7 provides an interface between a SCN network and the signalling termination point 6. The control functions of the gateway 1 are split between high layer resource control functions in the gateway control logic unit 5 and lower layer resource control functions provided by a gateway device 8. The H.323 interface between the packet-based user data in the H.323 network and the user data in the SCN network is provided by the gateway device 8.

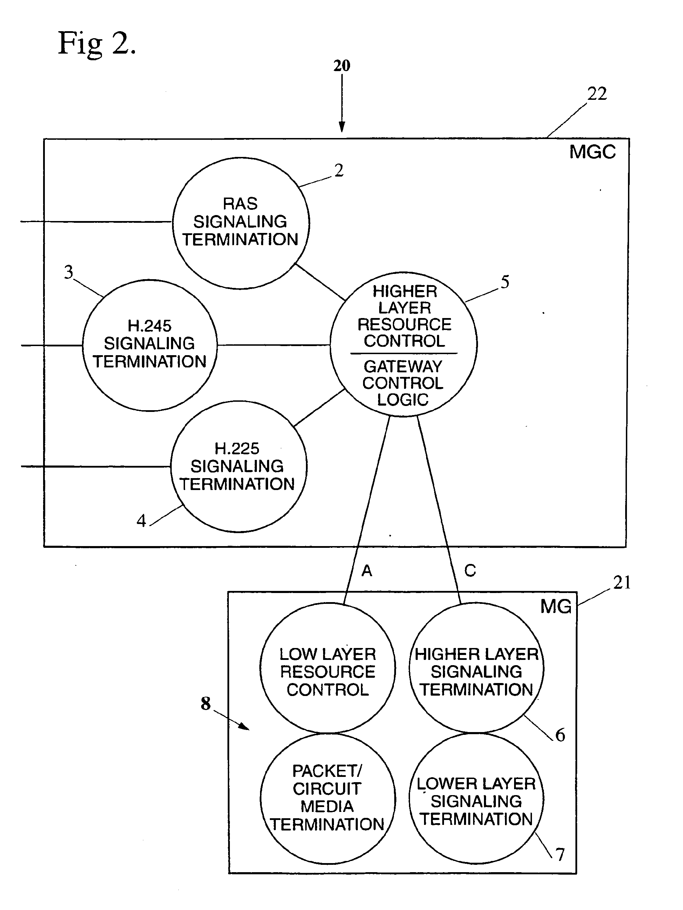

The functionality of the media gateway 1 may be physically decomposed into a media gateway controller and a media gateway. Figure 2 shows one example of such a physical decomposed multimedia gateway 20. In this example, the Facility Associated Signalling SCN services provided by the termination points 6 and 7 are isolated - together with the gateway device functions 8 - in a media gateway 21, whilst the H.323 signalling is retained in a media gateway controller 22. It will be appreciated that many other possible gateway decompositions may be conceived by a skilled person in the telecommunications field. In general, it can said that the media gateway 21 acts to convert media provided in one type of network to the format required in another type of network. The media gateway controller 22 controls those parts of the call state that pertain to connection control for media channels in the media gateway 21.

It can be seen from Figure 2 that the physically decomposed multimedia gateway 20 exposes a device control interface A between the gateway control logic unit 5 and the gateway device functions 8, as well as an SCN signalling interface C between the gateway control logic unit 5 and the SCN termination functions 6 and 7. Messages are therefore required to be exchanged on the A and C interfaces between the media gateway controller 21 and the media gateway 22 over an external telecommunications link. In this example, the Vertical Control Protocol defines a general framework for exchanging such messages between elements of a physically decomposed multimedia gateway over the A interface.

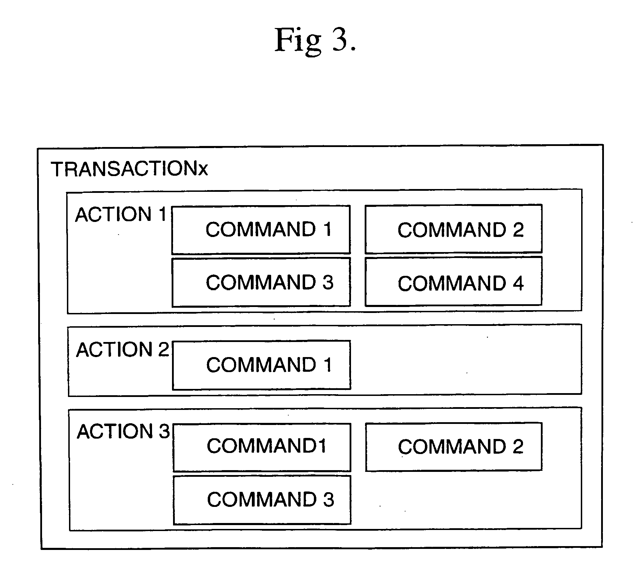

In accordance with the Vertical Control Protocol, commands from the media gateway controller 22 to the media gateway 21 are grouped into Transactions, each of which consists of one or more Actions. An Action consists of a series of Commands that are limited to operating within a single Context. A Context represents a collection of Terminations (entities that source and/or sink media streams) involved in a single call or conference. Transactions are presented to the media gateway 21 as Transaction Request messages. Corresponding responses, in the form of a Transaction Accept message or a Transaction Reject message, are returned to the media gateway controller 22. Figure 3 provides a graphical representation of the relationships between Transactions, Actions and Commands in a Vertical Control Protocol message.

Vertical Control Protocol messages are transported between the media gateway controller 22 and the media gateway 21 through a communication protocol stack including a network layer conforming to a message transfer part (MTP) protocol. The ITU-T has defined Signalling System No. 7 (SS7), which is a signalling system in wide use in telecommunications networks around the world. The message transfer part of SS7 was originally defined for narrowband signalling networks. It has been found that the MTP protocol may be used in the transport of Vertical Control Protocol messages between entities of a physically decomposed telecommunications node.

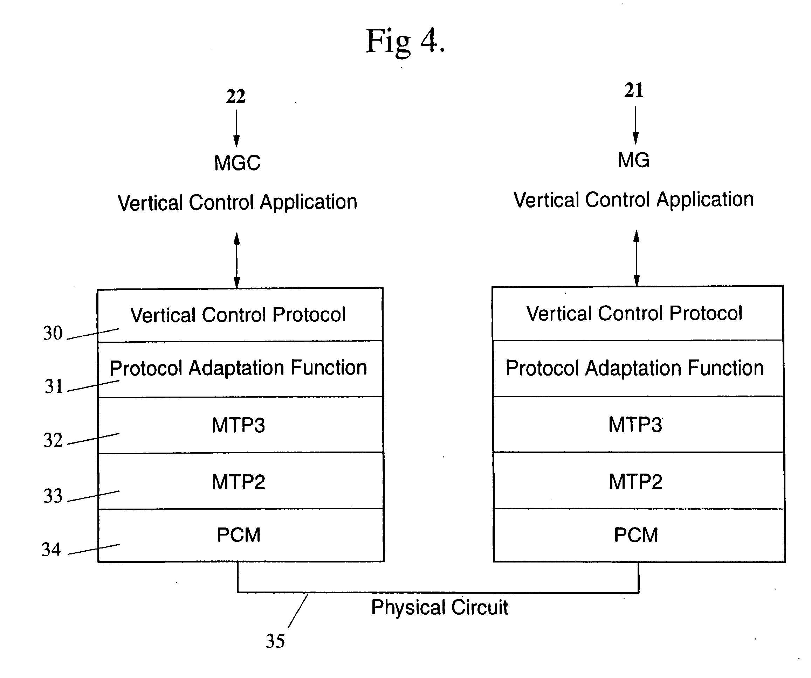

A first exemplary protocol stack is represented in Figure 4. Vertical Control Protocol messages, in the format represented in Figure 3, are created from a specific applications program - stored in the media gateway controller 22 - by one or more Vertical Control Protocol layers 30. One or more MTP protocol layers are provided to enable the transport of the Vertical Control Protocol message over a traditional switched communications network link to the media gateway 21. In this example, an MTP3 signalling network layer 32 and an MTP2 signalling data link layer 33 are provided in the protocol stack for transport of the Vertical Control Protocol message over a PCM channel 34 of physical circuit 35 of a switched communication network. The switched communication network may provide out-of-band signalling on one of the PCM channels of the physical circuit 35, as is the case in SS7 networks, or may provide in-band signalling as is the case in an ATM or like cell-switched network.

A Protocol Adaptation Function layer 31 is provided to adapt the Vertical Control Protocol messages from the layer 30 so that no changes need be made to the conventional MTP3 layer 32. In that regard, since the MTP3 protocol is limited to maximum message length of 272 octets and the Vertical Control Protocol may contain messages of greater than this value, the Protocol Adaptation Function layer 31 may act to segment and reassemble Vertical Control Protocol messages into units of 272 octets or less. The Vertical Control Protocol does not require changing if the underlying signalling stack is changed. This may be achieved by designing the interface between protocol stack layers 30 and 31 as a generic signalling transport service interface, so that the Vertical Control Protocol is made independent of the underlying stack. One of the functions of the Protocol Adaptation Function is to convert primitives from the generic transport service, between layers 30 and 31, into primitives able to be interpreted by the MTP layers. Accordingly, the Protocol Adaptation Function layer 31 acts to convert signalling messages from the Vertical Control Protocol layer 30 into messages able to be correctly interpreted by the MTP3 layer 32 and vice-versa.

The Protocol Adaptation Function layer 31 may include other functions. Firstly, this layer may act to convert or map network addresses provided by the VCP layer 30 into those able to be interpreted by the MTP3 layer 32, and vice-versa. This may be carried out by an interface to an external address translation function or be statically defined in a data store within the adaptation function. Secondly, as the underlying MTP service reports on the availability/unavailability of the data link service, after necessary translation, these notifications are passed by the Protocol Adaptation Function layer 31 to the Vertical Control Protocol layer 30. Similarly, if the underlying MTP3 layer 32 reports potential congestion, the adaptation function must translate these congestion notifications and pass them to the Vertical Control Protocol layer 30.

Some years after its original definition, a new version of SS7 was introduced with a different message transfer part (MTP3B) which uses higher capacity ATM signalling capabilities via a Network-to-Network Interface Signalling ATM Adaptive Layer (NNI-SAAL). Many telecommunications networks around the world use SS7, either with MTP3 or MTP3B, and this type of signalling will be retained in the near future due to the expense of upgrading as new technology emerges.

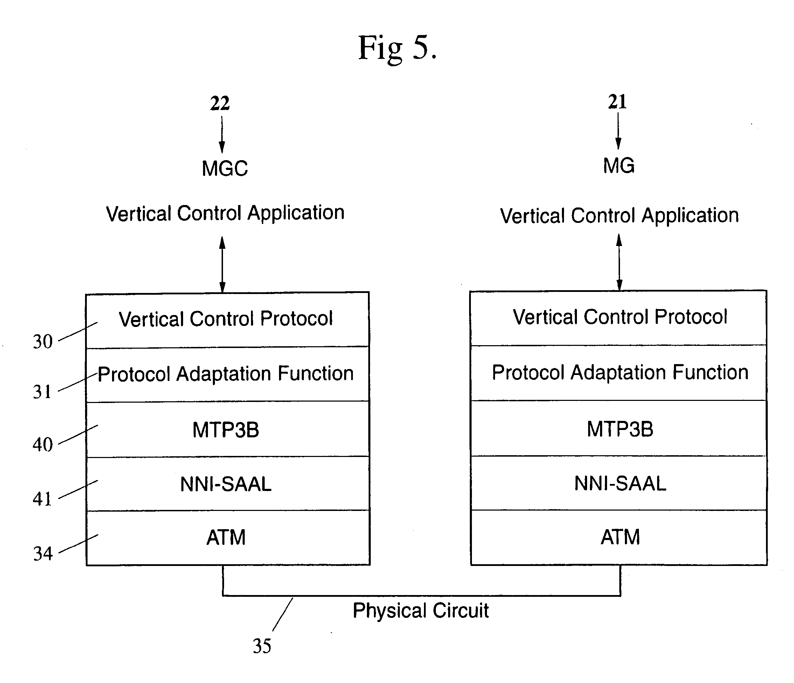

A second exemplary protocol stack, this time using MTP3B, is shown in Figure 5. In this case, an MTP3B signalling network layer 40 and an Network-to-Network Interface Signalling ATM Adaptive Layer (NNI-SAAL) signalling data link layer 41 are provided in the protocol stack for transport of the Vertical Control Protocol message as one or more ATM cells over a physical circuit of an ATM network. Once again, the Protocol Adaptation Function layer 31 may adapt the Vertical Control Protocol messages from the layer 30 so that no changes need be made to the conventional MTP3B layer 40. The MTP3B protocol is limited to maximum message length of 4096 octets, so that in cases where the Vertical Control Protocol contains messages longer than this value, the Protocol Adaptation Function layer 31 may act to segment and reassemble Vertical Control Protocol messages into units of 4096 octets or less. For the MTP3B scenario, the protocol adaptation function contains similar functionality to that described for the MTP3 scenario above.

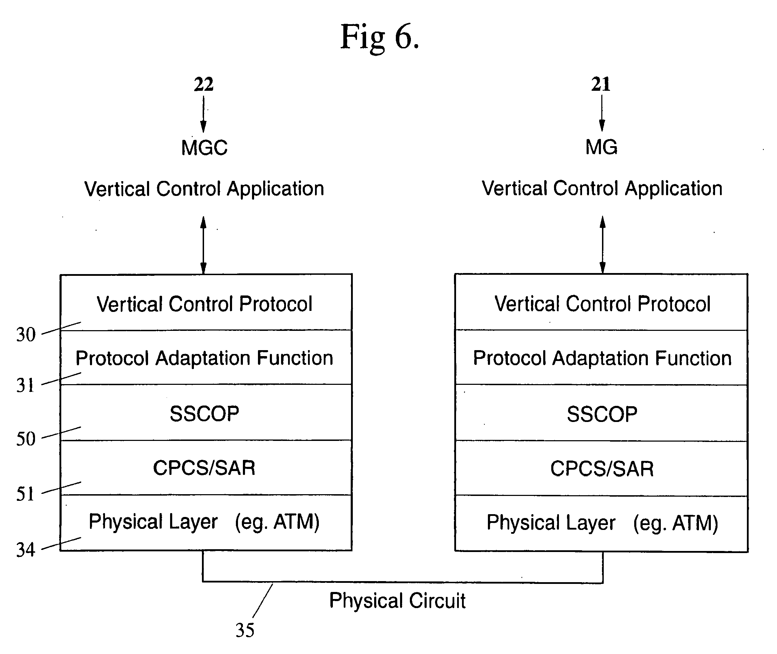

Vertical Control Protocol messages are transported between the media gateway controller 22 and the media gateway 21 through a communication protocol stack including a network layer conforming to a service specific connection oriented protocol (SSCOP). An exemplary protocol stack is represented in Figure 6. The ITU-T has defined Integrated Services Digital Networks (ISDN) which is a signalling system is wide use in telecommunications networks around the world. ISDN was originally defined for Narrowband signalling networks (N-ISDN). Presently efforts are being made to operate ISDN services using ATM as a transport medium. Different ATM signalling, and ATM related signalling, make use of the Signalling ATM Adaptation Layer (SAAL) to transport signalling messages, examples of which are P-NNI, signalling for AAL2 and DSS2. An integral part of the SAAL is the service specific connection oriented protocol (SSCOP), which provides mechanisms for the establishment and release of connections and the reliable exchange of information between peer entities. Many telecommunications networks around the world use the SAAL to transport the ATM signalling, and this type of signalling will be retained in the near future since upgrading as new technology emerges is costly. It has been found that the SCCOP may be used in the transport of Vertical Control Protocol messages between entities of a physically decomposed telecommunications node.

Vertical Control Protocol messages, in the format represented in Figure 3, are created from a specific applications program - stored in the media gateway controller 22 - by one or more Vertical Control Protocol layers 30. One or more Signalling ATM Adaptation layers are provided to enable the transport of the Vertical Control Protocol message over a traditional switched communications network link to the media gateway 21. In this example, a SSCOP layer 50 and a Common Part Convergence Sublayer / Segmentation and Reassembly (CPCS/SAR) layer 51 are provided in the protocol stack for transport of the Vertical Control Protocol message over an ATM layer 34. The Common Part Convergence Sublayer acts to provide transparent transport of Service Data Units produced by the SSCOP layer 50. A physical link 35 within a switched communication network, such as a B-ISDN link, may be used to provide transport of one or more ATM cells - bearing the Vertical Control Protocol message - to the media gateway 21. The SAR function of the CPCS/SAR layer 51 acts to segment the service data units from the SSCOP layer 50 to fit into the outgoing ATM cells, whilst incoming cells are reassembled into service data units and passed to the CPCS/SAR layer 51.

A Protocol Adaptation Function layer 31 is provided to adapt the Vertical Control Protocol messages from the layer 30 so that no changes need be made to the conventional SSCOP layer 502. In that regard, since the maximum message length of SSCOP messages is limited to 4096 octets and the Vertical Control Protocol may contain messages of greater length than this, the Protocol Adaptation Function layer 31 may act to segment and reassemble Vertical Control Protocol messages into units of 4096 octets or less. The Vertical Control Protocol does not require changing if the underlying signalling stack is changed. This is achieved by designing the interface between protocol stack layers 30 and 31 as a generic signalling transport service interface, so that the Vertical Control Protocol is made independent of the underlying stack. One of the functions of the Protocol Adaptation Function is to convert primitives from the generic transport service, between layers 30 and 31, into primitives able to be interpreted by the SSCOP layer 50. Accordingly, the Protocol Adaptation Function layer 31 acts to convert signalling messages from the Vertical Control Protocol layer 30 into messages able to be correctly interpreted by the SSCOP layer 50 and vice-versa.

The Protocol Adaptation Function layer 31 may include other functions. Firstly, this layer may act to convert or map network addresses provided by the VCP layer 30 into those able to be interpreted by the SSCOP layer 50, and vice-versa. This may be carried out by an interface to an external address translation function or be statically defined in a data store within the adaptation function. Secondly, as the underlying SSCOP service reports on the availability/unavailability of the data transfer service, after necessary translation, these notifications are passed by the Protocol Adaptation Function layer 31 to the Vertical Control Protocol layer 30. Similarly, if the underlying SSCOP layer 50 reports potential congestion, the adaptation function must translate these congestion notifications and pass them to the Vertical Control Protocol layer 30.

Those skilled in the art will appreciate that there may be many variations, modifications and/or additions to the configuration described herein which are within the scope of the present invention. In particular, whilst the present invention has been described in relation to use in a physically decomposed media gateway, it may also be used in other telecommunications nodes implemented in a separated environment where a protocol is required to enable to coupling between CC and BC functions.

## Claims

1. A telecommunications node (20), comprising a media gateway (21) for performing functions related to bearer control, BC functions, and a media gateway controller (22) for performing functions related to call control, CC functions, wherein the media gateway and the media gateway controller are adapted for generating gateway control protocol messages to be communicated over a physical circuit (35), said node comprising:
- means for creating a gateway control protocol message, and
- means for transporting said gateway control protocol message over the physical circuit (35) through a communication protocol stack including one or more network protocol layers (32, 40, 50),
**characterized by** further comprising a protocol adaptation function *(31)* in a protocol adoptation function layer adapted for
- converting gateway control protocol messages to network protocol messages associated to the network protocol layers of one of a plurality of signaling transport protocols and/or
- converting network protocol messages of one of a plurality of signaling transport protocols to gateway control protocol messages.

2. The telecommunications node of claim 1, wherein the protocol adaptation function (31) is adapted for converting gateway control protocol messages by logically mapping the contents of the gateway control protocol messages according to one of a plurality of network protocol message formats, and/or converting network protocol messages to gateway control protocol messages by logically mapping the contents of the network protocol messages according to a gateway control protocol message format..

3. The telecommunications node of any one of the previous claims, wherein the protocol adaptation function (31) is adapted for segmenting and reassembling gateway control protocol messages.

4. The telecommunications node of the previous claim, wherein the protocol adaptation function (31) is adapted to segment and reassemble gateway control protocol messages in order to limit the length of the gateway control protocol message to the maximum message length of the network protocol layers, if they exceed such length.

5. The telecommunications node of anyone of the previous claims, wherein the protocol adaptation function (31) is adapted for translating at least one of availability/unavailability reports and potential congestion reports of the data link service, and for passing them to a gateway control protocol layer 30.

6. The telecommunications node of any one of the previous claims, wherein the protocol adaptation function (31) is adapted for converting primitives from a generic transport service between the gateway control protocol layer and the protocol adaptation function layer into primitives for the network layer of one of the plurality of signaling transport protocols.

7. The telecommunications node of claim 6, wherein the network protocol messages are MTP protocol messages for SS7 signaling.

8. The telecommunications node of claim 6, wherein the network protocol messages are MTP broadband protocol messages for ATM signaling.

9. The telecommunications node of claim 6, wherein the network protocol messages are SSCOP protocol messages for ATM signaling.

10. A method of transporting messages within a telecommunication node (20) comprising a media gateway (21) for performing BC functions, and a media gateway controller (22) for CC functions, wherein the media gateway and the media gateway controller generate gateway control protocol messages to be communicated over a physical circuit (35), the method including the steps of:
- creating a gateway control protocol message, and
- transporting said gateway control protocol message over the physical circuit (35) through a communication protocol stack including one or more network protocol layers (32, 40, 50),
**characterized by**
- converting gateway control protocol messages to network protocol messages associated network protocol layers of one of a plurality of signaling transport protocols and/or
- converting network protocol messages of one of a plurality of signaling transport protocols to gateway control protocol messages,
- wherein the steps of converting are performed by a protocol adaptation function (31) in a protocol adaptation function layer.

11. A method as claimed in claim 10, wherein the step of converting gateway control protocol messages to network protocol messages includes logically mapping the contents of the gateway control protocol messages according to one of a plurality of network protocol message formats.

12. A method as claimed in claim 11, wherein the step of converting network protocol messages to gateway control protocol messages includes logically mapping the contents of the network protocol messages according to a gateway control protocol message format.

13. A method as claimed in any one of claims 10 to 12, wherein the step of converting gateway control protocol messages to network protocol messages includes segmenting gateway control protocol messages.

14. A method as claimed in any one of claims 10 to 13, wherein the step of converting network protocol messages to gateway control protocol messages includes reassembling gateway control protocol messages.

15. A method as claimed in any one of claims 10 to 14, wherein the step of converting gateway control protocol messages to network protocol messages includes converting primitives from a generic transport service between the gateway control protocol layer and the protocol adaptation function layer into primitives for the network layer of one of the plurality of signaling transport protocols.

16. A method as claimed in claim 15, wherein the network protocol messages are MTP protocol messages for SS7 signaling.

17. A method as claimed in claim 15, wherein the network protocol messages are MTP broadband protocol messages for ATM signaling.

18. A method as claimed in claim 15, wherein the network protocol messages are SSCOP protocol messages for ATM signaling.

## Patentansprüche

1. Telekommunikationsknoten (20), umfassend ein Media-Gateway (21) zum Ausführen von Funktionen in Bezug auf Trägersteuerungs- bzw. BC-Funktionen und eine Media-Gateway-Steuerung (22) zum Ausführen von Funktionen in Bezug auf Rufsteuerungs- bzw. CC-Funktionen, wobei das Media-Gateway und die Media-Gateway-Steuerung zum Erzeugen von Gateway-Steuerungsprotokollnachrichten ausgelegt sind, die über eine physikalische Leitung (35) zu übertragen sind, wobei der Knoten umfasst:
- Mittel zum Erstellen einer Gateway-Steuerungsprotokollnachricht, und
- Mittel zum Transportieren der Gateway-Steuerungsprotokollnachricht über eine physikalische Leitung (35) durch einen Kommunikationsprotokollstapel, der eine oder mehrere Netzprotokollschichten (32, 40, 50) umfasst,
**dadurch gekennzeichnet, dass** er ferner eine Protokollanpassungsfunktion in einer Protokollanpassungsfunktionsschicht umfasst, die ausgelegt ist zum:
- Umwandeln von Gateway-Steuerungsprotokollnachrichten in Netzprotokollnachrichten, die mit den Netzprotokollschichten eines von einer Mehrzahl von Signalisierungstransportprotokollen assoziiert sind, und/oder
- Umwandeln von Netzprotokollnachrichten eines von einer Mehrzahl von Signalisierungstransportprotokollen in Gateway-Steuerungsprotokollnachrichten.

2. Telekommunikationsknoten nach Anspruch 1, wobei die Protokollanpassungsfunktion (31) zum Umwandeln von Gateway-Steuerungsprotokollnachrichten durch logisches Zuordnen der Inhalte der Gateway-Steuerungsprotokollnachrichten gemäß einem von einer Mehrzahl von Netzprotokollnachrichtenformaten und/oder Umwandeln von Netzprotokollnachrichten in Gateway-Steuerungsprotokollnachrichten durch logisches Zuordnen der Inhalte der Netzprotokollnachrichten gemäß einem Gateway-Steuerungsprotokollnachrichtenformat ausgelegt ist.

3. Telekommunikationsknoten nach einem der vorhergehenden Ansprüche, wobei die Protokollanpassungsfunktion (31) zum Segmentieren und Wiederzusammensetzen von Gateway-Steuerungsprotokollnachrichten ausgelegt ist.

4. Telekommunikationsknoten nach dem vorhergehenden Anspruch, wobei die Protokollanpassungsfunktion (31) zum Segmentieren und Wiederzusammensetzen von Gateway-Steuerungsprotokollnachrichten ausgelegt ist, um die Länge der Gateway-Steuerungsprotokollnachricht auf eine maximale Nachrichtenlänge der Netzprotokollschichten zu begrenzen, wenn sie solch eine Länge überschreiten.

5. Telekommunikationsknoten nach einem der vorhergehenden Ansprüche, wobei die Protokollanpassungsfunktion (31) zum Übersetzen mindestens eines von Verfügbarkeits-/Nichtverfügbarkeitsberichten und Berichten potenzieller Überlastung des Datenverbindungsdienstes und zum Durchlassen derselben zu einer Gateway-Steuerungsprotokollschicht 30 ausgelegt ist.

6. Telekommunikationsknoten nach einem der vorhergehenden Ansprüche, wobei die Protokollanpassungsfunktion (31) zum Umwandeln von Primitiven aus einem generischen Transportdienst zwischen der Gateway-Steuerungsprotokollschicht und der Protokollanpassungsfunktionsschicht in Primitive für die Netzschicht eines von der Mehrzahl von Signalisierungstransportprotokollen ausgelegt ist.

7. Telekommunikationsknoten nach Anspruch 6, wobei die Netzprotokollnachrichten MTP-Protokollnachrichten zur SS7-Signalisierung sind.

8. Telekommunikationsknoten nach Anspruch 6, wobei die Netzprotokollnachrichten MTP-Breitband-Protokollnachrichten zur ATM-Signalisierung sind.

9. Telekommunikationsknoten nach Anspruch 6, wobei die Netzprotokollnachrichten SSCOP-Protokollnachrichten zur ATM-Signalisierung sind.

10. Verfahren zum Transportieren von Nachrichten innerhalb eines Telekommunikationsknotens (20), der ein Media-Gateway (21) zum Ausführen von BC-Funktionen und eine Media-Gateway-Steuerung (22) für CC-Funktionen umfasst, wobei das Media-Gateway und die Media-Gateway-Steuerung Gateway-Steuerungsprotokollnachrichten erzeugen, die über eine physikalische Leitung (35) zu übertragen sind, wobei das Verfahren umfasst:
- Erstellen einer Gateway-Steuerungsprotokollnachricht, und
- Transportieren der Gateway-Steuerungsprotokollnachricht über eine physikalische Leitung (35) durch einen Kommunikationsprotokollstapel, der eine oder mehrere Netzprotokollschichten (32, 40, 50) umfasst,
**gekennzeichnet durch**
- Umwandeln von Gateway-Steuerungsprotokollnachrichten in Netzprotokollnachrichten, die mit den Netzprotokollschichten eines von einer Mehrzahl von Signalisierungstransportprotokollen assoziiert sind, und/oder
- Umwandeln von Netzprotokollnachrichten eines von einer Mehrzahl von Signalisierungstransportprotokollen in Gateway-Steuerungsprotokollnachrichten.
- wobei die Schritte des Umwandelns von einer Protokollanpassungsfunktion (31) in einer Protokollanpassungsfunktionsschicht ausgeführt werden.

11. Verfahren nach Anspruch 10, wobei der Schritt des Umwandelns von Gateway-Steuerungsprotokollnachrichten in Netzprotokollnachrichten ein logisches Zuordnen der Inhalte der Gateway-Steuerungsprotokollnachrichten gemäß einem von einer Mehrzahl von Netzprotokollnachrichtenformaten umfasst.

12. Verfahren nach Anspruch 11, wobei der Schritt des Umwandelns von Netzprotokollnachrichten in Gateway-Steuerungsprotokollnachrichten ein logisches Zuordnen der Inhalte der Netzprotokollnachrichten gemäß einem Gateway-Steuerungsprotokollnachrichtenformat umfasst.

13. Verfahren nach einem der Ansprüche 10 bis 12, wobei der Schritt des Umwandelns von Gateway-Steuerungsprotokollnachrichten in Netzprotokollnachrichten ein Segmentieren von Gateway-Steuerungsprotokollnachrichten umfasst.

14. Verfahren nach einem der Ansprüche 10 bis 13, wobei der Schritt des Umwandelns von Netzprotokollnachrichten in Gateway-Steuerungsprotokollnachrichten ein Wiederzusammensetzen von Gateway-Steuerungsprotokollnachrichten umfasst.

15. Verfahren nach einem der Ansprüche 10 bis 14, wobei der Schritt des Umwandelns von Gateway-Steuerungsprotokollnachrichten in Netzprotokollnachrichten ein Umwandeln von Primitiven aus einem generischen Transportdienst zwischen der Gateway-Steuerungsprotokollschicht und der Protokollanpassungsfunktionsschicht in Primitive für die Netzschicht eines von der Mehrzahl von Signalisierungstransportprotokollen umfasst.

16. Verfahren nach Anspruch 15, wobei die Netzprotokollnachrichten MTP-Protokollnachrichten zur SS7-Signalisierung sind.

17. Verfahren nach Anspruch 15, wobei die Netzprotokollnachrichten MTP-Breitband-Protokollnachrichten zur ATM-Signalisierung sind.

18. Verfahren nach Anspruch 15, wobei die Netzprotokollnachrichten SSCOP-Protokollnachrichten zur ATM-Signalisierung sind.

## Revendications

1. Noeud de télécommunications (20), comprenant une passerelle média (21) pour exécuter des fonctions relatives à la commande de support, fonctions BC, et un contrôleur de passerelle média (22) pour exécuter des fonctions relatives à la commande d'appel, fonctions CC, dans lequel la passerelle média et le contrôleur de passerelle média sont adaptés pour générer des messages de protocole de commande de passerelle à communiquer sur un circuit physique (35), ledit noeud comprenant :
- un moyen pour créer un message de protocole de commande de passerelle, et
- un moyen pour transporter ledit message de protocole de commande de passerelle sur le circuit physique (35) à travers un message de protocole de communication incluant une ou plusieurs couches de protocole de réseau (32,40,50),
**caractérisé en ce qu'**il comprend en outre une fonction d'adaptation de protocole (31) dans une couche de fonction d'adaptation de protocole adaptée afin de
- convertir des messages de protocole de commande de passerelle en messages de protocole de réseau associés aux couches de protocole de réseau d'un d'une pluralité de protocoles de transport de signalisation et/ou
- convertir des messages de protocole de réseau d'un d'une pluralité de protocoles de transport de signalisation en messages de protocole de commande de passerelle.

2. Noeud de télécommunications selon la revendication 1, dans lequel la fonction d'adaptation de protocole (31) est adaptée pour convertir des messages de protocole de commande de passerelle en mettant en correspondance logiquement les contenus des messages de protocole de commande de passerelle selon un d'une pluralité de formats de message de protocole de réseau et/ou convertir des messages de protocole de réseau en messages de protocole de commande de passerelle en mettant en correspondance logiquement les contenus des messages de protocole de réseau selon un format de message de protocole de commande de passerelle.

3. Noeud de télécommunications selon une quelconque des revendications précédentes, dans lequel la fonction d'adaptation de protocole (31) est adaptée pour segmenter et réassembler les messages de protocole de commande de passerelle.

4. Noeud de télécommunications selon la revendication précédente, dans lequel la fonction d'adaptation de protocole (31) est adaptée pour segmenter et réassembler les messages de protocole de commande de passerelle de manière à limiter la longueur du message de protocole de commande de passerelle à la longueur de message maximale des couches de protocole de réseau, si ils excèdent une telle longueur.

5. Noeud de télécommunications selon une quelconque des revendications précédentes, dans lequel la fonction d'adaptation de protocole (31) est adaptée pour traduire au moins un de rapports de disponibilité/indisponibilité et rapports d'engorgement potentiel du service de liaison de données, et pour les faire passer à une couche de protocole de commande de passerelle 30.

6. Noeud de télécommunications selon une quelconque des revendications précédentes, dans lequel la fonction d'adaptation de protocole (31) est adaptée pour convertir des primitives provenant d'un service de transport générique entre la couche de protocole de commande de passerelle et la couche de fonction d'adaptation de protocole en primitives pour la couche de réseau d'un de la pluralité de protocoles de transport de signalisation.

7. Noeud de télécommunications selon la revendication 6, dans lequel les messages de protocoles de réseau sont des messages de protocole MTP pour signalisation SS7.

8. Noeud de télécommunications selon la revendication 6, dans lequel les messages de protocole de réseau sont des messages de protocole large bande MTP pour signalisation ATM.

9. Noeud de télécommunications selon la revendication 6, dans lequel les messages de protocole de réseau sont des messages de protocole SSCOP pour signalisation ATM.

10. Procédé de transport de messages à l'intérieur d'un noeud de télécommunications (20) comprenant une passerelle média (21) pour exécuter des fonctions BC, et un contrôleur de passerelle média (22) pour fonctions CC, dans lequel la passerelle média et le contrôleur de passerelle média génèrent des messages de protocole de commande de passerelle à communiquer sur un circuit physique (35), le procédé incluant les étapes consistant à :
- créer un message de protocole de commande de passerelle, et
- transporter ledit message de protocole de commande de passerelle sur le circuit physique (35) à travers une pile de protocole de communication incluant une ou plusieurs couches de protocole de réseau (32,40,50),
**caractérisé par**
- convertir les messages de protocole de commande de passerelle en messages de protocole de réseau associés aux couches de protocole de réseau d'un d'une pluralité de protocoles de transport de signalisation et/ou
- convertir les messages de protocole de réseau d'un d'une pluralité de protocoles de transport de signalisation en messages de protocole de commande de passerelle,
- dans lequel les étapes de conversion sont effectuées par une fonction d'adaptation de protocole (31) dans une couche de fonction d'adaptation de protocole.

11. Procédé selon la revendication 10, dans lequel l'étape de conversion des messages de protocole de commande de passerelle en messages de protocole de réseau inclut de mettre en correspondance logiquement les contenus des messages de protocole de commande de passerelle selon un d'une pluralité de formats de message de protocole de réseau.

12. Procédé selon la revendication 11, dans lequel l'étape de conversion des messages de protocole de réseau en messages de protocole de commande de passerelle inclut de mettre en correspondance logiquement les contenus des messages de protocole de réseau selon un format de message de protocole de commande de passerelle.

13. Procédé selon une quelconque des revendications 10 à 12, dans lequel l'étape de conversion des messages de protocole de commande de passerelle en messages de protocole de réseau inclut de segmenter des messages de protocole de commande de passerelle.

14. Procédé selon une quelconque des revendications 10 à 13, dans lequel l'étape de conversion des messages de protocole de réseau en messages de protocole de commande de passerelle inclut de réassembler des messages de protocole de commande de passerelle.

15. Procédé selon une quelconque des revendications 10 à 14, dans lequel l'étape de conversion des messages de protocole de commande de passerelle en message de protocole de réseau inclut de convertir des primitives provenant d'un service de transport générique entre la couche de protocole de commande de passerelle et la couche de fonction d'adaptation de protocole en primitives pour la couche de réseau d'un de la pluralité de protocoles de transport de signalisation.

16. Procédé selon la revendication 15, dans lequel les messages de protocole de réseau sont des messages de protocole MTP pour signalisation SS7.

17. Procédé selon la revendication 15, dans lequel les messages de protocole de réseau sont des messages de protocole large bande MTP pour signalisation ATM.

18. Procédé selon la revendication 15, dans lequel les messages de protocole de réseau sont des messages de protocole SSCOP pour signalisation ATM.
